Europäisches Patentamt

European Patent Office

Office européen des brevets

(19)

(11) **EP 0 452 467 B1**

(12)

# FASCICULE DE BREVET EUROPEEN

(45) Date de publication et mention
de la délivrance du brevet:
**17.01.1996   Bulletin 1996/03**

(21) Numéro de dépôt: **90917008.6**

(22) Date de dépôt: **08.11.1990**

(51) Int Cl.$^6$: **C08F 210/16**

(86) Numéro de dépôt international:
**PCT/FR90/00801**

(87) Numéro de publication internationale:
**WO 91/07447 (30.05.1991 Gazette 1991/12)**

(54) **NOUVEAUX CAOUTCHOUCS POLYOLEFINIQUES ET LEUR PROCEDE DE PREPARATION**

POLYOLEFINKAUTSCHUK UND VERFAHREN ZU DESSEN HERSTELLUNG

NEW POLYOLEFINIC RUBBERS AND PREPARATION METHOD THEROF

(84) Etats contractants désignés:
**AT BE CH DE DK ES FR GB GR IT LI LU NL SE**

(30) Priorité: **08.11.1989  FR 8914681**

(43) Date de publication de la demande:
**23.10.1991   Bulletin 1991/43**

(73) Titulaire: **ECP ENICHEM POLYMERES FRANCE**
**F-92411 Courbevoie (FR)**

(72) Inventeurs:
• **MEHALLA, Hacene**
**F-62400 Essars (FR)**
• **MORESE-SEGUELA, Brigitte**
**F-62232 Hinges (FR)**
• **BREANT, Patrice**
**F-62350 Robecq (FR)**

(74) Mandataire: **Chaillot, Geneviève**
**F-92703 Colombes Cédex (FR)**

(56) Documents cités:
EP-A- 0 016 707      EP-A- 0 041 423
EP-A- 0 053 956      EP-A- 0 141 597
EP-A- 0 175 000      FR-A- 2 439 211
GB-A- 2 053 246

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1)Convention sur le brevet européen).

## Description

La présente invention se rapporte à une nouvelle famille de caoutchoucs polyoléfiniques et à un procédé pour leur préparation.

On connaît déjà des caoutchoucs polyoléfiniques consistant en des copolymères d'éthylène et d'alpha-oléfine ayant une densité comprise entre 0,860 et 0,885. L'alpha-oléfine choisie pour la constitution de ces caoutchoucs polyoléfiniques est généralement le propylène ou le butène-1. On connaît également divers procédés pour l'obtention de tels caoutchoucs polyoléfiniques. On a déjà remarqué que chaque procédé conduit, de par ses caractéristiques, à une famille de caoutchoucs polyoléfiniques possédant une structure macromoléculaire particulière et une aptitude particulière à être utilisés efficacement dans telle ou telle application.

Comme il est bien connu des spécialistes des caoutchoucs polyoléfiniques, les paramètres à considérer pour la définition complète de leur structure macromoléculaire sont :

- l'indice de fluidité,
- la densité,
- la masse moléculaire moyenne en nombre Mn,
- la masse moléculaire géométrique moyenne Mg,
- l'indice de polydispersité Mw/Mn (rapport de la masse moyenne en poids à la masse moyenne en nombre),
- la viscosité Mooney,
- la proportion molaire d'alpha-oléfine(s),
- la température de fusion cristalline (déterminée par analyse enthalpique différentielle),
- le taux de cristallinité résiduelle (déterminé par rayons X).

Ainsi, on connaît une première famille de caoutchoucs polyoléfiniques commercialisés par la société MONTEDISON sous la marque DUTRAL®, consistant en des copolymères de 65 à 80% en moles d'éthylène et de 20 à 35% en moles de propylène, ayant une densité de 0,850 à 0,870, ne possédant aucune cristallinité résiduelle et donc pas de température de fusion cristalline, possédant une masse moléculaire géométrique moyenne de 90 à 100 kg/mole et un indice de polydispersité compris entre 2,2 et 2,9. On connaît également une seconde famille de caoutchoucs polyoléfiniques commercialisés par la société MITSUI sous la marque TAFMER®, consistant en des copolymères de 78 à 92% en moles d'éthylène et de 8 à 22% en moles d'une alpha-oléfine choisie parmi le propylène et le butène-1, ayant une densité de 0,860 à 0,890, ayant un taux de cristallinité résiduelle de 1 à 14%, une température de fusion cristalline J de 75°C, possédant une masse moléculaire géométrique moyenne de 60 à 120 kg/mole et un indice de polydispersité compris entre 2,2 et 2,7.

Par ailleurs, la valeur d'usage des caoutchoucs polyoléfiniques, notamment leur aptitude à être utilisés dans certaines applications telles que notamment l'isolation et le remplissage de câbles électriques basse tension à haute tension et la fabrication de produits souples tels que tuyaux ou éléments de chaussure se mesure généralement après réticulation par un système de peroxydes par les propriétés suivantes :

- allongement à la rupture,
- résistance à la rupture,
- dureté Shore A,
- flexion de Mattia.

Le problème que la présente invention vise à résoudre consiste à améliorer le compromis de propriétés des caoutchoucs polyoléfiniques par rapport aux propriétés de ceux connus à ce jour, notamment en améliorant, à une densité donnée, l'allongement à la rupture et la flexion de Mattia après réticulation.

Ainsi, la présente invention a pour premier objet un caoutchouc polyoléfinique consistant en un copolymère éthylène/propylène et/ou butène-1, ayant un indice de fluidité compris entre 0,3 et 15 dg/min. environ et une densité comprise entre 0,860 et 0,885 environ, comprenant de 74 à 91% en moles de motifs dérivés de l'éthylène et de 9 à 26% en moles de motifs dérivés du propylène et/ou du butène-1, caractérisé par une température de fusion cristalline J comprise entre 100° et 125°C environ. Subsidiairement, le caoutchouc polyoléfinique selon l'invention peut être caractérisé par au moins l'un des éléments suivants :

- un indice de polydispersité compris entre 3,5 et 15 environ, de préférence, entre 4 et 8 environ,
- une masse moléculaire géométrique moyenne (définie comme indiqué ci-après) comprise entre 35 et 70 kg/mole environ,
- une relation entre la densité d et la teneur x (exprimée en % en moles) en motifs dérivés du propylène et du butène-1 qui se traduit par la double équation :

$$0,9084 \leq d + 0,002\,x \leq 0,918$$

- un taux de cristallinité résiduelle (déterminé selon la méthode décrite ci-après) compris entre 2 et 15% environ.

Par température de fusion cristalline J au sens de la présente invention, on entend la température déterminée au maximum de la courbe de fusion après cristallisation obtenue en soumettant l'échantillon de copolymère au processus en trois étapes suivant :

- fusion à la vitesse de 8°C par minute depuis 10°C jusqu'à 150°C, puis
- cristallisation à la vitesse de 8°C par minute depuis 150°C jusqu'à 10°C, puis à nouveau
- fusion à la vitesse de 8°C par minute depuis 10°C jusqu'à 150°C.

Le taux de cristallinité résiduelle selon la présente invention est déterminé par diffraction des rayons X sur un échantillon de copolymère ayant subi un refroidissement à la vitesse de 5°C par heure depuis 190°C jusqu'à la température ambiante.

La masse moléculaire géométrique moyenne est définie, selon la présente invention, par la relation mathématique :

$$\log_{10} Mg = \sum_{i=1}^{i=N} W_i \log_{10} M_i$$

où $W_i$ est la fraction en poids de matière de masse $M_i$ et N est le nombre de fractions éluées par chromatographie sur gel perméable.

Comme on le conçoit aisément, la densité du copolymère selon l'invention est d'autant plus élevée que la teneur en motifs dérivés de l'éthylène est plus élevée.

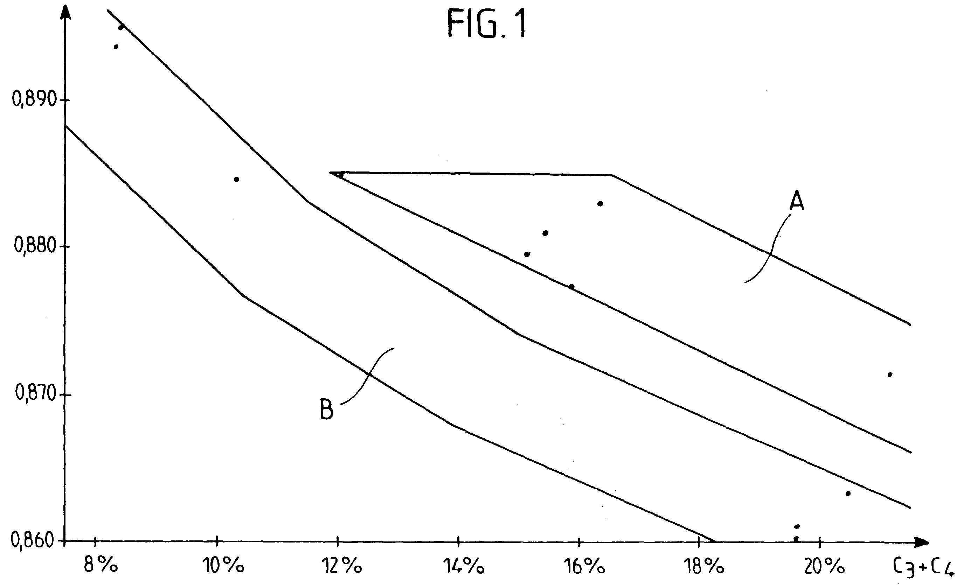

En ce qui concerne la relation précitée entre la densité d du copolymère et sa teneur x en motifs dérivés du propylène et/ou du butène-1, la figure 1 en annexe illustre les domaines respectifs des copolymères selon l'invention (domaine A) et des copolymères de l'art antérieur commercialisés sous la marque TAFMER ® (domaine B).

Le copolymère selon l'invention peut comprendre simultanément des motifs dérivés du propylène et des motifs dérivé du butène-1. Leur présence simultanée dans le caoutchouc polyoléfinique permet également d'assurer l'amélioration du compromis de propriétés recherchée par la présente invention. Leurs proportions respectives peuvent varier dans de larges limites tout en atteignant cet objectif.

Le trait distinctif des copolymères selon l'invention par rapport aux caoutchoucs polyoléfiniques connus et décrits plus haut réside dans leur température de fusion cristalline J notoirement plus élevée et, accessoirement, dans leur polydispersité plus grande. Les copolymères selon l'invention se distinguent en outre des caoutchoucs polyoléfiniques commercialisés sous la marque DUTRAL® par leur masse moléculaire géométrique moyenne notoirement moins élevée.

En sortie de son unité de production, le caoutchouc polyoléfinique selon l'invention peut être conditionné sous différentes formes, en particulier pastilles, granulés, blocs ou pains. Lorsqu'il est conditionné sous forme de pastilles ou granulés de faibles dimensions (par exemple 1 à 5 mm environ), il est préférable, pour faciliter leur coupe et leur transport, d'enrober leur surface au moyen d'une huile de silicone ou d'un agent tensio-actif non-ionique, tel qu'un copolymère d'oxyde de propylène et d'oxyde d'éthylène. Dans ce cas, une quantité suffisante d'agent d'enrobage est généralement comprise entre 0,2‰ et 0,5‰ environ en poids par rapport au caoutchouc. Lorsqu'on désire en outre éviter la reprise en masse du caoutchouc (conditionné sous forme de pastilles ou granulés de faibles dimensions) après un stockage de durée prolongée, il peut être nécessaire de porter jusqu'à 5‰ environ la quantité d'agent d'enrobage par rapport au caoutchouc ou bien de mélanger le caoutchouc avec jusqu'à 10%, de préférence au moins 4%, en poids d'un acide gras ou d'un sel d'acide gras tel que l'acide stéarique, ce qui confère au caoutchouc une coulabilité parfaite même après 4 mois de stockage. L'enrobage peut être effectué par malaxage à sec ou bien par pulvérisation, ou encore par voie humide par addition de l'agent d'enrobage, dans une proportion de 0,5 à 5% dans l'eau, à l'eau de refroidissement des pastilles ou granulés en sortie de l'unité de production. Dans ce dernier cas, il est généralement préférable que l'eau de refroidissement soit à une température d'au moins 35°C et à un pH compris entre 8 et 11 environ.

La présente invention a pour second objet un procédé pour l'obtention du caoutchouc polyoléfinique défini précédemment, consistant à copolymériser, à une température de 150° à 300°C environ et sous une pression de 400 à 2000 bars environ, un flux gazeux contenant de 15 à 42% environ en volume d'éthylène et de 58% à 85% environ en volume de propylène et/ou de butène-1, en présence d'un système catalytique de type Ziegler comprenant, d'une part, au moins un composé de métal de transition des groupes IVB, VB, VIB et VIII de la Classification Périodique, et d'autre part, au moins un composé organo-aluminique, et, le cas échéant, en présence d'au moins un agent de transfert de chaîne. Le système catalytique peut en outre comprendre au moins un halogénure d'aluminium et/ou de magnésium. Pour atteindre les copolymères possédant les caractéristiques décrites ci-dessus, et dans lesquels le rapport molaire

$$\frac{\text{motifs dérivés du propylène}}{\text{motifs dérivés du butène-1}}$$

dépasse 0,5, la composition du flux gazeux soumis à la copolymérisation sera de préférence telle que le rapport en volume

$$\frac{\text{propylène}}{\text{butène-1}}$$

dépasse 0,3 environ selon la nature du système catalytique utilisé. Le choix de celui-ci a en effet une influence, connue de l'homme de l'art, sur la réactivité relative de l'éthylène, du propylène et du butène-1 dans la copolymérisation et par conséquent sur la tendance à incorporer préférentiellement des motifs dérivés du propylène ou bien des motifs dérivés du butène-1 dans la chaîne macromoléculaire.

Des systèmes catalytiques de type Ziegler comprenant, d'une part, au moins un composé de métal de transition des groupes IVB, VB, VIB et VIII de la Classification Périodique, et, d'autre part, au moins un composé organo-aluminique, aptes à la copolymérisation sélective de l'éthylène et du propylène ou du butène-1, sous pression élevée, sont déjà connus de l'homme de l'art. Ils incluent notamment mais non exclusivement ceux décrits dans les brevets EP-A-0 32 339, EP-A-0 053 956, US-A-4 396 532, FR-A-2 342 306, FR-A-2 400 040, EP-A-0 070 749 et EP-A-0 072 717, dont la description détaillée est incorporée ici par référence.

Certains systèmes catalytiques de type Ziegler aptes à la copolymérisation de l'éthylène avec le propylène ou le butène-1 sous basse pression, tels que par exemple celui décrit par le brevet FR-A-2 265 778, peuvent également convenir à la mise en oeuvre du procédé selon la présente invention. Enfin, de nouveaux systèmes catalytiques de type Ziegler ont été trouvés particulièrement aptes à la copolymérisation sélective de l'éthylène, du propylène et du butène-1 sous pression élevée.

Il en va ainsi en premier lieu d'un catalyseur comprenant au moins un composé de titane et au moins un composé organo-aluminique halogéné, en suspension dans au moins un $\alpha,\omega$-dihalogénoalcane, caractérisé en ce que le composé de titane est essentiellement un composé de titane (III), la teneur globale en titane (II) et en titane (IV) étant inférieure ou égale à 15% de la teneur totale en titane, et en ce qu'il comprend en outre au moins un composé inorganique de magnésium à l'état de suspension.

Dans un tel catalyseur :

- le composé organo-aluminique halogéné a pour formule générale $X_2Al(CH_2)_nAlX_2$ dans laquelle X est un halogène, de préférence, le chlore, et n est compris entre 1 et 10.
- L'$\alpha,\omega$-dihalogénoalcane a pour formule générale $X\text{-}(CH_2)_n\text{-}X'$ dans laquelle X et X', identiques ou différents, sont chacun un atome d'halogène, tels le chlore, le brome et le fluor et n est un nombre entier compris entre 1 et 10, de préférence entre 1 et 6. La nature des atomes d'halogène et la valeur de n sont telles que l'$\alpha,\omega$-dihalogénoalcane soit liquide dans les conditions normales de température et de pression. Parmi les composés répondant à la formule générale précédente, on choisit avantageusement le dichlorométhane, le 1,2-dichloroéthane, le 1,4-dichlorobutane ou leurs mélanges.
- Un solvant inerte peut être présent simultanément avec l'$\alpha,\omega$-dihalogénoalcane. Ce solvant est choisi de préférence parmi les hydrocarbures aliphatiques ou cycloaliphatiques saturés ayant de 6 à 14 atomes de carbone, dont la température d'ébullition, sous pression atmosphérique, n'est pas inférieure à 60°C et leurs mélanges. Il peut s'agir par exemple d'une coupe d'hydrocarbures aliphatiques saturés en $C_{10}\text{-}C_{12}$. Le solvant inerte est utilisé en une quantité pouvant aller jusqu'à 100 parties en poids, pour 100 parties en poids de solvant halogéné.
- L'état d'oxydation du composé de titane est déterminé par dosage rédox en trois parties, la première permettant de calculer $Ti^{2+} + Ti^{3+}$, la deuxième $2Ti^{2+} + Ti^{3+}$, la teneur en composé de titane à la valence II étant donc obtenue par différence, et la troisième $Ti^{2+} + Ti^{3+} + Ti^{4+}$ (quantité totale de titane qui permet d'en déduire la teneur en composé de $Ti^{4+}$).
- Par composé inorganique de magnésium, on entend un sel de magnésium d'acide minéral, tel un halogénure, avantageusement le chlorure de magnésium de préférence anhydre.
- un composé de vanadium, avantageusement à la valence III tel que $VCl_3$, peut également être présent simultanément avec le composé de titane.
- le rapport atomique Cl/Ti est avantageusement compris entre 10 et 180, de préférence entre 20 et 60.
- le rapport atomique Al/Ti est avantageusement compris entre 0,5 et 12, de préférence entre 3 et 6.
- le rapport atomique Mg/Ti est avantageusement compris entre 1 et 15, de préférence, entre 3 et 8.
- le rapport atomique V/Ti est avantageusement compris entre 0 et 6, de préférence, entre 0 et 3.
- une $\alpha$-oléfine ayant par exemple de 4 à 16 atomes de carbone, le cas échéant à l'état au moins partiellement polymérisé, peut être présente.

Un tel catalyseur peut être préparé par exemple par mélange de ses constituants, le composé organo-aluminique halogéné pouvant être préparé conformément au brevet US-A-3 787 383. Il peut également être préparé par un procédé comprenant simultanément l'oxydation électrochimique au moins partielle de l'aluminium dans un $\alpha,\omega$-dihalogénoalcane et la réduction électrochimique d'un composé de titane (IV). Dans un tel procédé, l'oxydation et la réduction électrochimiques simultanées ont lieu dans une cellule d'électrolyse en faisant passer un courant électrique entre une anode et une cathode plongées dans l'électrolyte comprenant le solvant halogéné, le cas échéant additionné d'un solvant inerte, le composé de titane (IV). De par sa constitution, cet électrolyte est peu conducteur, toutefois, il est possible d'augmenter sa conductivité en lui ajoutant des quantités pouvant aller jusqu'à 10 fois la quantité du composé de titane (IV) (exprimée en moles) d'au moins une oléfine supérieure. On peut utiliser à cette fin une $\alpha$-oléfine ayant par exemple de 4 à 16 atomes de carbone, avantageusement l'hexène-1.

Ce procédé est mis en oeuvre à une température comprise entre 0°C et la température d'ébullition du solvant (halogéné et le cas échéant, inerte) ou bien celle de l'$\alpha$-oléfine. L'électrolyse étant exothermique, il y a lieu de prévoir un dispositif de refroidissement du milieu réactionnel et, le cas échéant, une cellule d'électrolyse pouvant fonctionner sous légère surpression (jusqu'à 2 bars environ).

Le composé de titane (IV) soumis à réduction électrochimique est choisi parmi les composés de formule générale $Ti(OR)_nX_{4-n}$ dans laquelle X est un atome d'halogène choisi parmi le fluor, le chlore, le brome et l'iode, R est un radical alkyle ayant de 1 à 10 atomes de carbone et $0 \leq n \leq 4$. Avantageusement, le composé de titane (IV) est le tétrachlorure de titane, le dichlorodiéthoxytitane, le dichlorodi(n)butoxytitane. La concentration du milieu réactionnel en composé de titane (IV) est avantageusement comprise entre 20 et 600 millimoles par litre. Bien qu'une concentration élevée pose des problèmes de conductivité et de diffusion des espèces dans un milieu dont la viscosité est augmentée, elle permet par contre de diminuer le rapport molaire solvant halogéné/titane dans le catalyseur obtenu et ainsi d'éviter les inconvénients de la présence d'une quantité trop importante de composé halogéné lors de la polymérisation. Il est possible d'ajouter au milieu réactionnel pendant l'électrolyse, un composé de vanadium (IV) ou de vanadium (V) choisi parmi les composés de formule générale $VO(OR)_mX_{3-m}$ dans laquelle X est un halogène, R est un radical alkyle ayant de 1 à 6 atomes de carbone et $0 \leq m \leq 3$, et les composés de formule $VX_4$ dans laquelle X est un halogène. Des exemples de tels composés sont $VCl_4$ et $VOCl_3$. La concentration du milieu réactionnel en composé de vanadium est avantageusement comprise entre 0 et 100 millimoles par litre.

Des analyses effectuées sur le mélange réactionnel après oxydo-réduction électrochimique dans des conditions variées ont montré que, de façon surprenante, quelle que soit la quantité d'électricité ayant traversé le milieu réactionnel, le dérivé de titane (IV) n'était pas réduit au-delà du degré d'oxydation (III). On a ainsi trouvé qu'il est possible de faire passer la quantité de courant nécessaire pour générer le composé organo-aluminique halogéné sans modifier le degré d'oxydation du composé de titane (III) obtenu. L'oxydation et la réduction électrochimiques simultanées sont ainsi, de manière avantageuse, réalisées en faisant passer dans le milieu réactionnel une quantité d'électricité comprise entre 1 et 12 Faradays par mole de titane, de préférence entre 1 et 8 Faradays par mole de titane.

Le procédé peut être mis en oeuvre par l'une quelconque des trois méthodes électrochimiques classiques : potentiel cathodique imposé, potentiel cathodique régulé ou intensité constante.

L'oxydo-réduction électrochimique à potentiel cathodique imposé est réalisée avec un dispositif comprenant une électrode de référence (par exemple Ag/AgCl/Cl), une électrode de travail (cathode) et une électrode auxiliaire (anode) soluble en aluminium. On impose un potentiel constant entre l'électrode de référence et la cathode, le potentiostat branché entre cathode et anode délivre alors la tension de travail. Le potentiel constant imposé est compris entre -0,5 et -1 volt.

La voie du potentiel cathodique régulé consiste à établir une tension de travail donnée entre cathode et anode, sans utiliser d'électrode de référence. On a constaté que les réactions visées (solubilisation de l'anode en aluminium et réaction avec le solvant halogéné, réduction du dérivé de titane (IV) à la cathode) sont possibles sans que le dérivé de titane (III) obtenu se réduise plus avant à la cathode. On peut ainsi opérer à un potentiel cathodique régulé compris entre 20 et 200 volts. Le passage d'un premier Faraday par mole de titane réduit le dérivé de titane (IV) en dérivé de titane (III) et fournit, par atome-gramme de titane, un équivalent-gramme d'aluminium sous forme de dérivé organo-aluminique halogéné. Le passage des Faradays suivants permet d'augmenter la quantité de dérivé organo-aluminique halogéné sans réduction du composé de titane (III) formé.

L'oxydo-réduction à intensité constante consiste à prédéterminer la valeur de l'intensité qui traversera l'électrolyte, un dispositif de régulation en déduisant instantanément la valeur de la différence de potentiel à appliquer entre anode et cathode pour que l'intensité soit maintenue à la valeur choisie. Dans le cas présent, on opère avantageusement à une intensité comprise entre 100 mA et 100 A.

Le procédé est mis en oeuvre dans une cellule d'électrolyse dont la cathode est constituée d'un métal (généralement un panier métallique) choisi notamment parmi le platine, le fer, l'aluminium et leurs alliages respectifs. La cathode peut être constituée par la cellule d'électrolyse elle-même réalisée alors en métal. L'anode d'aluminium ou d'alliage à base d'aluminium est alors disposée près de la paroi interne de la cellule. Si anode et cathode sont toutes deux en aluminium ou en alliage d'aluminium, il est alors possible de réaliser l'électrolyse au moyen d'un courant alternatif.

Parmi les nouveaux systèmes catalytiques de type Ziegler aptes à la copolymérisation sélective de l'éthylène, du propylène et du butène-1 sous pression élevée, on peut citer en second lieu un catalyseur comprenant au moins un composé de titane, au moins un composé organo-aluminique halogéné et au moins un composé inorganique de magnésium en suspension dans au moins un $\alpha,\omega$-dihalogénoalcane, caractérisé en ce que le composé de titane est essentiellement un composé de titane (III), la teneur globale en titane (II) et en titane (IV) étant inférieure ou égale à 15% de la teneur totale en titane. Dans un tel catalyseur, la détermination des états de valence du titane est faite au moyen d'un dosage rédox en 3 parties. La première partie permet de calculer la teneur en ($Ti^{2+} + Ti^{3+}$) ; elle consiste à oxyder $Ti^{2+}$ en $Ti^{3+}$ au moyen de protons apportés sous la forme d'une solution d'HCl 2N préparée dans de l'eau distillée dégazée. Le $Ti^{3+}$ formé plus le $Ti^{3+}$ présent à l'origine sont alors oxydés en $Ti^{4+}$ au moyen d'un excès de solution de $Fe^{3+}$ 0,2N. $Fe^{3+}$ est réduit en $Fe^{2+}$ qui est dosé par le bichromate de potassium en milieu sulfurique-phosphorique en présence de diphénylamine sulfonate de sodium à 0,2%. La quantité de $Fe^{2+}$ ainsi dosée correspond aux ions $Ti^{2+} + Ti^{3+}$ présents à l'origine dans le catalyseur. La deuxième partie permet de calculer la teneur en $2Ti^{2+} + Ti^{3+}$. Elle consiste à oxyder $Ti^{2+}$ et $Ti^{3+}$ au moyen d'un excès d'une solution d'ions $Fe^{3+}$, en absence de protons pour éviter l'oxydation de $Ti^{2+}$ en $Ti^{3+}$, selon les réactions :

$$Ti^{2+} + 2Fe^{3+} \rightarrow Ti^{4+} + 2Fe^{2+}$$

et

$$Ti^{3+} + Fe^{3+} \rightarrow Ti^{4+} + Fe^{2+}$$

Le dosage de l'ion $Fe^{2+}$ est alors effectué au moyen de bichromate de potassium comme ci-dessus. La valeur obtenue correspond à la somme $2Ti^{2+} + Ti^{3+}$ présente dans le catalyseur. La troisième partie permet de déterminer la teneur en $Ti^{4+}$ par réduction, au moyen de triéthylaluminium selon un rapport atomique A1/Ti égal à 6, du titane (IV) présent en titane (III) et titane (II). Le dosage est alors effectué selon la première partie ci-dessus la valeur trouvée pour $Ti^{2+} + Ti^{3+}$ correspondant à la somme $Ti^{2+} + Ti^{3+} + Ti^{4+}$ des ions présents dans le composant catalytique analysé et par conséquent à la teneur totale en titane. Les différents pourcentages sont calculés en résolvant le système d'équations suivant :

$$Ti^{2+} + Ti^{3+} = A$$

$$2Ti^{2+} + Ti^{3+} = B$$

$$Ti^{2+} + Ti^{3+} + Ti^{4+} = C$$

Parmi les composés de titane pouvant être présents dans ce catalyseur, on peut citer notamment les trihalogénures $TiX_3$, avantageusement le trichlorure $TiCl_3$.

Ce catalyseur peut en outre comprendre au moins un composé de vanadium sous la forme soit du trihalogénure $VX_3$, par exemple le trichlorure $VCl_3$, du tétrahalogénure $VX_4$, par exemple du tétrachlorure $VCl_4$, de l'oxy-tri-halogénure $VOX_3$, par exemple l'oxytrichlorure $VOCl_3$, d'(halogéno)ester de vanadyle de formule $VO(OR)_nX_{3-n}$ dans laquelle X est un halogène, de préférence le chlore, R est un radical alkyle ayant de 1 à 6 atomes de carbone et n est compris entre 1 et 3. De préférence, le vanadium est présent à l'état de valence (III) et/ou (IV).

Le composé de magnésium contenu à l'état de suspension dans ce catalyseur est avantageusement un halogénure de magnésium, de préférence anhydre, par exemple le chlorure de magnésium anhydre.

Ce catalyseur peut être obtenu par un procédé comprenant, dans une première étape, la réduction d'un composé de titane (IV) dans un $\alpha,\omega$-dihalogénoalcane au moyen d'un excès molaire d'au moins un composé organoaluminique halogéné, en l'absence d'un éther, caractérisé en ce qu'il comprend, dans une deuxième étape, l'ajout au mélange réactionnel d'un composé susceptible de former un halogénure de magnésium in situ, sans réduction supplémentaire du composé de titane obtenu lors de la première étape.

Le composé de titane (IV) à réduire a avantageusement pour formule générale $Ti(OR)_nX_{4-n}$ dans laquelle X est un halogène, R est un radical alkyle ayant de 1 à 10 atomes de carbone et $0 \leq n \leq 4$. On utilise préférentiellement le tétrachlorure de titane $TiCl_4$.

Un composé de vanadium (III), (IV) ou (V) peut être ajouté au composé de titane (IV) avant, pendant ou après réduction. Sa formule générale est $VX_3$, $VX_4$ ou $VO(OR)_mX_{3-m}$ dans lesquelles X est un halogène, de préférence le chlore, R est un radical alkyle ayant de 1 à 6 atomes de carbone et $0 \leq m \leq 3$. Avantageusement, le composé de vanadium pentavalent contient au moins un atome de chlore. On utilise par exemple l'oxytrichlorure $VOCl_3$ pour un ajout avant réduction, $VCl_3$ pour un ajout après réduction du composé de titane (IV).

L'$\alpha,\omega$-dihalogénoalcane utilisé comme milieu de suspension de ce catalyseur a pour formule générale $X-(CH_2)_n-X'$ dans laquelle X et X', identiques ou différents, sont chacun un atome d'halogène, tels le chlore, le brome et le fluor et n est un nombre entier compris entre 1 et 10, de préférence entre 1 et 6. La nature des atomes d'halogène et la valeur de n sont telles que l'$\alpha,\omega$-dihalogénoalcane soit liquide dans les conditions normales de température et de pression. Parmi les composés répondant à la formule générale précédente, on choisit avantageusement le dichlorométhane, le 1,2-dichloroéthane, le 1,4-dichlorobutane et leurs mélanges.

Le composé organo-aluminique halogéné utilisé pour réduire le composé de titane (IV) est choisi parmi :

- les composés de formule générale $R_nAlX_{3-n}$ dans laquelle R est un radical alkyle ayant de 1 à 4 atomes de carbone, X est un halogène et $1 \leq n \leq 2$. On citera par exemple le dichloroéthylaluminium, le chlorodiéthylaluminium et leurs mélanges.
- les composés de formule générale $X_2Al(CH_2)_nAlX_2$ dans laquelle X est un atome d'halogène et $1 \leq n \leq 8$. Ils peuvent être obtenus par réaction de l'aluminium sur un $\alpha,\omega$-dihalogénoalcane. On citera par exemple les composés de formule $Cl_2AlCH_2AlCl_2$ et $Cl_2Al(CH_2)_2AlCl_2$.

Le procédé peut être mis en oeuvre en présence, en outre, d'un solvant inerte avantageusement choisi parmi les hydrocarbures aliphatiques ou cycloaliphatiques saturés dont la température d'ébullition sous pression atmosphérique n'est pas inférieure à 60°C. Il peut s'agir notamment d'un hydrocarbure aliphatique ou cycloaliphatique saturé ayant de 6 à 14 atomes de carbone, par exemple une coupe d'hydrocarbures aliphatiques saturés en $C_{10}$-$C_{12}$. La quantité de solvant inerte est choisie de telle sorte que le catalyseur obtenu soit sous forme de suspension manipulable.

Le procédé peut également être mis en oeuvre en présence d'au moins une $\alpha$-oléfine ayant au moins 4 atomes de carbone, afin de favoriser l'activité des centres actifs du catalyseur. Comme $\alpha$-oléfine on peut utiliser avantageusement le méthyl-4-pentène-1, l'hexène-1, l'octène-1, le décène-1, en une quantité pouvant aller jusqu'à 10 fois la quantité molaire de composé de titane (IV).

Comme composé susceptible de former in situ un halogénure de magnésium, on peut citer notamment un dérivé organomagnésien de formule R-Mg-R' dans laquelle R et R', identiques ou différents, sont des radicaux alkyle ayant de 1 à 12 atomes de carbones. Avantageusement, on utilise le n-butyléthylmagnésium ou le n-butyl-n-octylmagnésium ou leurs mélanges.

Le procédé peut être mis en oeuvre dans un réacteur agité à une température comprise entre 0 et 80°C. Les précautions habituelles sont prises pour éviter les pertes de produits volatils en opérant sous une pression adéquate. La présence d'un $\alpha,\omega$-dihalogéno-alcane dans le milieu réactionnel a pour effet de favoriser la réduction du composé de titane (IV) essentiellement jusqu'à un composé de titane (III), alors que si l'$\alpha,\omega$-dihalogénoalcane est absent, la formation de composé de titane (II) est très importante.

Les proportions relatives des différents réactifs mis en oeuvre dans le procédé sont les suivantes, exprimées en rapports molaires :

- $\alpha,\omega$-dihalogénoalcane/composé de titane, et le cas échéant de vanadium : avantageusement compris entre 5 et 180, de préférence entre 8 et 60 ;
- composé organoaluminique halogéné/composé de titane, et le cas échéant de vanadium : supérieur à 1 ; il est de préférence inférieur ou égal à 6 ;
- composé susceptible de former un halogénure de magnésium in situ/composé de titane, et le cas échéant de vanadium : avantageusement compris entre 1 et 15, de préférence compris entre 1 et 6 ;
- composé de vanadium/composé de titane : avantageusement inférieur ou égal à 6, de préférence inférieur ou égal à 3, encore préférentiellement compris entre 0 et 1 ;
- composé organoaluminique halogéné/composé susceptible de former un halogénure de magnésium in situ : avantageusement compris entre 0,3 et 2, de préférence entre 0,5 et 1,5.

Les deux catalyseurs qui viennent d'être décrits peuvent en outre comprendre un activateur organométallique des groupes I à III de la Classification Périodique. L'activateur est avantageusement choisi parmi les trialkylaluminiums $AlR_3$, les tétralkylaluminoxanes RR'Al-O-AlR''R''', les monoalkylsilanolatodialkylaluminiums $RSiH_2$-O-AlR'R'' et leurs mélanges, les radicaux alkyles R, R', R'', R''', identiques ou différents, ayant de 1 à 12 atomes de carbone. On citera par exemple le triéthylaluminium, le tri-n-butylaluminium, le tri-n-octylaluminium, le tétraisobutylaluminoxane, le méthylsilanolatodiisobutylaluminium et leurs mélanges.

L'activateur est généralement utilisé dans une quantité allant jusqu'à 100 fois la quantité molaire de composé de métal de transition.

De manière connue en soi, et quel que soit le système catalytique de type Ziegler utilisé, la copolymérisation de l'éthylène, du propylène et/ou du butène-1 dans le procédé selon l'invention peut être effectuée :

- en présence d'un gaz inerte vis-à-vis des oléfines, tel que l'azote, le propane ou le butane, à raison de jusqu'à 50% environ en volume par rapport aux monomères;
- en présence d'au moins un agent de transfert de chaîne tel que l'hydrogène en quantité suffisante, par exemple jusqu'à environ 2% en moles par rapport aux oléfines, pour moduler le poids moléculaire et l'indice de fluidité du terpolymère ;

- en introduisant, dans le courant des monomères recyclés n'ayant pas réagi, un désactivateur du système catalytique tel que décrit dans les brevets EP-A-116 797, EP-A-116 248 et EP-A-115 233 ;
- de façon continue dans au moins un réacteur, autoclave ou tubulaire, comprenant une ou plusieurs zones réactionnelles fonctionnant à des températures le cas échéant différentes, dans lequel le temps moyen de séjour des monomères est compris entre 1 et 150 secondes environ. Le cas échéant on peut utiliser deux réacteurs fonctionnant en parallèle dans une configuration telle que celle du brevet EP-0 013 229.

De manière préférée, lorsqu'un réacteur autoclave comprenant au moins deux zones réactionnelles est utilisé, les monomères sont alimentés en provenance du compresseur à haute pression vers une première zone dont la température est régulée à un niveau inférieur à celui de la (des) zone(s) ultérieure(s).

Le procédé selon l'invention permet d'obtenir avec de bons rendements catalytiques des copolymères possédant les paramètres de structure macromoléculaire définis précédemment et possédant après réticulation une bonne aptitude à des applications telles que notamment l'isolation et le remplissage de câbles électriques basse tension à haute tension et les autres applications visées ci-après.

La présente invention a donc aussi pour objet un caoutchouc polyoléfinique réticulé obtenu par action, sur le copolymère éthylène/propylène et/ou butène-1 défini précédemment, d'au moins un peroxyde à raison de 0,5% à 2% environ en poids par rapport au copolymère, à une température comprise entre 160°C et 250°C environ et pendant une durée comprise entre 2 et 20 minutes environ ou bien encore par greffage d'un alkoxysilane suivi de l'hydrolyse du copolymère greffé en présence, le cas échéant, d'un catalyseur d'hydrolyse tel que le dilaurate de dibutylétain. Comme il est bien connu de l'homme de l'art pour la réticulation de polymères oléfiniques, la proportion de peroxyde ou d'alkoxysilane à utiliser, la température et la durée de réticulation (la durée étant d'autant plus courte que la température est plus élevée) sont adaptées en fonction de la nature du peroxyde ou de l'alkoxysilane utilisé et du polymère oléfinique. Dans le cas de la présente invention, il est préférable, en fonction des usages principaux du caoutchouc réticulé, que les conditions de la réticulation soient adaptées de manière que le taux de gel (déterminé selon la norme ASTM D 2765-75) du caoutchouc réticulé soit compris entre 70 et 90% en poids environ. Parmi les peroxydes utilisables pour cette réticulation, on peut citer les peroxydes de benzoyle, de dicumyle, de tertiobutyle, de tertioamyle, de lauryle et le 1,3-bis (tertiobutylperoxy-isopropyl) benzène et leur mélanges. Au peroxyde, il est possible d'ajouter jusqu'à 1% en poids (par rapport au copolymère) de soufre et jusqu'à 4% en poids d'oxyde de zinc. Parmi les alkoxysilanes utilisables, on peut citer notamment le vinyltriméthoxysilane.

Après réticulation par un système de peroxydes, ou bien encore par greffage d'un alkoxysilane suivi de l'hydrolyse du copolymère greffé obtenu, les copolymères selon l'invention présentent un compromis de propriétés très satisfaisant tel que :

- une dureté Shore A comprise entre 60 et 82 environ ;
- un allongement à la rupture au moins égal à 600% environ et généralement compris entre 600 et 1000% ;
- une résistance à la rupture comprise entre 60 et 150 daN/cm$^2$ ;
- une flexion de Mattia (déterminée selon la norme NFT 51016) ne dépassant pas 12 mm environ d'entaille après 10$^5$ flexions.

Il a été observé que lorsque le taux de gel du caoutchouc réticulé dépasse 90%, son allongement à la rupture décroît fortement.

Les copolymères selon l'invention sont également aptes, après réticulation et transformation par les techniques d'extrusion, d'injection ou de compression, à la fabrication d'articles industriels tels que joints d'étanchéité, éléments de chaussures, tuyaux souples, éléments amortissants, profils pour l'industrie du bâtiment et de l'automobile, etc.

Les exemples ci-après sont donnés à titre illustratif et non-limitatif de la présente invention.

Exemple 1

Un catalyseur est préparé comme suit dans un ballon en verre muni d'un agitateur et surmonté d'un réfrigérant, sous atmosphère d'azote. Les différents réactifs sont introduits à une vitesse telle que le milieu réactionnel soit maintenu à une température comprise entre 15 et 60 °C. La préparation dure environ une heure.

On introduit successivement dans le ballon, sous agitation et à température ambiante, 400 millimoles de 1,2-dichloroéthane, 76 millimoles d'hexène-1, puis 10 millimoles de TiCl$_4$ (dilué à 1 mole/litre dans une coupe d'hydrocarbures aliphatiques saturés en C$_{10}$-C$_{12}$ utilisée comme solvant inerte), et enfin 60 millimoles de dichloroéthylaluminium.

On maintient sous agitation pendant 30 à 45 minutes et on ajoute 100 ml du même solvant inerte puis 60 millimoles de n-butyléthylmagnésium goutte à goutte. La température s'élève d'environ 40°C. On laisse refroidir à l'ambiante et on ajoute 10 millimoles d'oxytrichlorure de vanadium. On complète avec le solvant inerte de façon à obtenir le catalyseur en suspension à une concentration de 50 millimoles/litre de titane et vanadium.

Dans une installation fonctionnant en continu et comprenant un réacteur alimenté en monomères au moyen de compresseurs et en système catalytique au moyen d'une pompe à haute pression, un séparateur dans lequel le mélange réactionnel provenant du réacteur est admis après détente à 250 bars, une trémie dans laquelle le copolymère se trouvant dans le fond du séparateur est admis après détente à une valeur de 10 bars environ, on réalise la terpolymérisation d'un mélange de 40% d'éthylène, 35% de propylène et 25% de butène-1 (% en moles) à la température de 200°C et sous une pression de 800 bars.

Le système catalytique comprend le catalyseur tel que préparé ci-dessus et l'activateur triéthylaluminium (25% molaire)-méthylsilanolatodiisobutylaluminium (75% molaire), le rapport atomique Al (de l'activateur) à la somme Ti+V (du catalyseur) étant égal à 20.

On recueille 13,8 kg de terpolymère par millimole de titane et vanadium, ayant une densité de 0,884, un indice de fluidité (mesuré selon la norme ASTM D 1238-condition E) égal à 7,3 dg/min et un taux de cristallinité (mesuré par diffraction des rayons X) égal à 14%. L'analyse de ce terpolymère par résonance magnétique nucléaire du carbone 13 a permis de déterminer les teneurs molaires suivantes en comonomères :

propylène       : 8,5%
butène-1        : 6%

Exemple 2

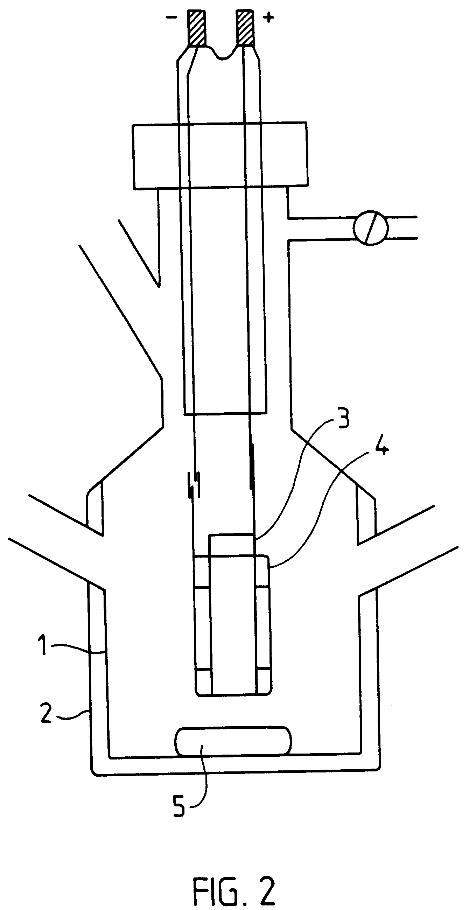

Un composant catalytique est préparé comme suit dans une cellule d'électrolyse représentée schématiquement sur la Figure 2 en annexe. Le corps de la cellule (1) est muni d'une double enveloppe (2) permettant de contrôler la température. L'anode (3) et la cathode (4) sont cylindriques et coaxiales. Le milieu réactionnel est agité magnétiquement au moyen du barreau (5). Le composant catalytique est préparé sous atmosphère inerte. On opère à potentiel cathodique régulé : l'électrolyse est réalisée en appliquant une tension constante de 70 volts entre, d'une part, l'anode en aluminium, et d'autre part, la cathode constituée d'un panier en platine. Les conditions opératoires sont les suivantes :

- solvant : 35 ml de 1,2-dichloroéthane ;
- composé de titane soumis à réduction : 10 millimoles de tétrachlorure de titane ;
- additif de conductivité : 8 millimoles d'hexène-1 ;
- quantité d'électricité ayant traversé l'électrolyte à la fin de la préparation : 30 millifaradays.

Le composant catalytique ainsi obtenu est additionné d'abord de 60 millimoles de n-butyléthylmagnésium puis de 10 millimoles d'oxychlorure de vanadium. Le catalyseur résultant est alors utilisé comme suit pour la terpolymérisation d'un mélange de 35% en volume d'éthylène, 40% en volume de propylène et 25% en volume de butène-1.

L'installation de polymérisation fonctionne en régime continu et comprend un réacteur autoclave agité thermostaté, alimenté en mélange d'éthylène et d'$\alpha$-oléfine au moyen de 2 compresseurs disposés en série, le second compresseur recevant en outre les monomères n'ayant pas réagi et provenant d'un séparateur dans lequel le produit du réacteur s'écoule en continu. Le séparateur est disposé à la suite d'une vanne d'expansion située à la sortie du réacteur et est maintenu sous une pression d'environ 250 bars. Le polymère recueilli au fond du séparateur est introduit, par une vanne d'expansion, dans une trémie d'où le polymère, séparé sous une pression d'environ 10 bars s'écoule dans une extrudeuse. Les gaz provenant de la trémie sont recyclés vers l'entrée du premier compresseur.

Le mélange d'éthylène et d'$\alpha$-oléfine est introduit en continu dans le réacteur dans lequel est admis également le système catalytique comprenant d'une part le catalyseur tel que préparé ci-dessus, et d'autre part, l'activateur triéthylaluminium (25% molaire)-méthylsilanolatodiiisobutylaluminium (75% molaire), le rapport molaire

$$\frac{Al}{Ti + V}$$

étant égal à 20. La polymérisation est effectuée à 225°C sous une pression de 800 bars et en l'absence d'agent de transfert de chaîne.

On recueilli 12,5 kg de terpolymère par millimole de titane et vanadium, ayant une densité de 0,882 et un indice de fluidité (mesuré selon la norme ASTM D 1238, condition E) égal à 8,8 dg/min. L'analyse de ce terpolymère par résonance magnétique nucléaire du carbone 13 a permis de déterminer les teneurs molaires suivantes en comonomères :

propylène       : 11,1 %
butène-1        : 4,5 %

Exemples 3 à 8

On effectue la terpolymérisation de l'éthylène, du propylène et du butène-1 dans une installation identique à celle des exemples précédents, à l'exception du fait que le réacteur comprenant trois zones fonctionnant aux températures $T_1$, $T_2$ et $T_3$ (exprimées en degré Celsius) indiquées dans le Tableau I ci-après. La polymérisation est effectuée sous une pression de 680 bars (sauf à l'exemple 8: 700 bars) et en présence des proportions (exprimées en pourcentage en volume par rapport aux monomères) d'azote et d'hydrogène indiquées au tableau I. Les proportions en volume de propylène et de butène-1 dans le mélange de monomères, notées respectivement $C_3$ et $C_4$ et exprimées en pourcentages, figurent également au tableau I. L'alimentation en mélange de monomères est répartie comme suit : 60% dans la première zone, 35% dans la seconde zone et 5% dans la troisième zone.

Le système catalytique injecté dans chaque zone comprend d'une part, l'activateur diméthyléthyldiéthylsiloxalane, et d'autre part, le composé de formule $TiCl_3$, 1/3 $AlCl_3$, $VCl_3$ en quantités respectivement telles que le rapport atomique Al/Ti+V soit égal à 3.

TABLEAU I

| Exemple | $T_1$ | $T_2$ | $T_3$ | $N_2$ | $H_2$ | $C_3$ | $C_4$ |
|---|---|---|---|---|---|---|---|
| 3 | 214 | 216 | 253 | 6 | 0 | 19,3 | 40,5 |
| 4 | 200 | 220 | 260 | 5 | 0 | 36,5 | 31,7 |
| 5 | 175 | 217 | 250 | 5 | 0,009 | 17 | 45 |
| 6 | 174 | 201 | 244 | 6 | 0 | 27 | 37 |
| 7 | 169 | 200 | 245 | 6 | 0 | 27 | 37 |
| 8 | 175 | 225 | 247 | 5 | 0,002 | 28,5 | 39,8 |

Les terpolymères obtenus selon ce procédé de fabrication sont ensuite analysés pour déterminer :

- leur densité d, mesurée selon la norme ASTM D-1505
- leur indice de fluidité IF, mesuré selon la norme ASTM D-1238 (condition E) et exprimé en dg/min.
- leur température de fusion cristalline J, exprimée en degrés Celsius et mesurée selon le processus décrit précédemment,
- leur taux C de cristallinité résiduelle, exprimé en pourcentage du terpolymère total et mesuré comme indiqué précédemment,
- leur indice de polydispersité Mw/Mn, calculé à partir des masses moléculaires moyennes en poids et en nombre déterminées par chromatographie sur gel perméable,
- leurs teneurs molaires p et b respectivement en propylène et en butène-1 dans le terpolymère, exprimées en pourcentage et déterminées par résonance magnétique nucléaire du carbone 13,
- leur masse moléculaire géométrique moyenne Mg, exprimée en kg/mole et déterminée par calcul à partir des mesures de chromatographie sur gel perméable selon la définition donnée précédemment.

L'ensemble des résultats d'analyse figure au tableau II.

TABLEAU II

| Exemple | d | I.F. | J | C | Mw/Mn | p | b | Mg |
|---|---|---|---|---|---|---|---|---|
| 3 | 0,8848 | 4,1 | 109 | 14 | 4,5 | 6,4 | 5,6 | 46 |
| 4 | 0,8830 | 3,8 | 120 | 15 | 4,8 | 10,3 | 6,0 | 40 |
| 5 | 0,8810 | 1,2 | 107 | 11 | 4,7 | 6,7 | 8,7 | 65 |
| 6 | 0,8796 | 1,7 | 106 | 13 | 6,0 | 9,5 | 5,6 | 48 |
| 7 | 0,8774 | 1,7 | 104 | 10 | 5,2 | 9,6 | 6,2 | 48 |
| 8 | 0,8716 | 2,6 | 109 | 6 | 4,7 | 11,6 | 9,5 | 58 |

Afin de déterminer la valeur d'usage des terpolymères obtenus, chaque terpolymère est mélangé à sec avec 1,1% de son propre poids d'un peroxyde commercialisé sous l'appellation PERKADOX Y 14/90, puis le mélange est placé à 80°C dans un mélangeur de type FARREL et malaxé pendant 150 secondes afin que par auto-échauffement sa température atteigne 130°C. A cette température, le mélange ainsi homogénéisé est retiré du mélangeur, puis rebroyé après préformage sous presse froide. Le mélange rebroyé est calandré à 130°C pendant 150 secondes, puis on réalise une plaque sous presse à 130°C avant de la porter à 180°C pendant 15 minutes pour que la réticulation s'opère. La plaque est ensuite refroidie et découpée en échantillons sur lesquels on mesure :

- la dureté Shore A,
- l'allongement à la rupture AR (exprimé en %) et la résistance à la rupture RR (exprimé en daN/cm$^2$), déterminés selon la norme ASTM D-638,
- la flexion de Mattia, déterminée selon la norme NFT 51016 et exprimée en mm d'entaille après 10$^5$ flexions.

Les résultats de ces mesures figurent au tableau III ci-après. Par ailleurs, le taux de gel, mesuré selon la norme ASTM D 2765-75, est dans chaque cas égal à 85% en poids.

Exemples 9 à 11 (comparatifs)

On considère successivement :

- un copolymère éthylène/butène-1 commercialisé par la société MITSUI sous la dénomination TAFMER P 4085 (exemple 9),
- un copolymère éthylène/propylène commercialisé par la société MITSUI sous la dénomination TAFMER P 480 (exemple 10), et
- un copolymère éthylène/propylène commercialisé par la société MONTEDISON sous la dénomination DUTRAL CO 034 (exemple 11).

Ces produits ont été analysés comme ceux des exemples 3 à 8. Leurs caractéristiques sont rassemblées au tableau IV ci-après. Ils ont d'autre part été réticulés par peroxyde dans les mêmes conditions que les produits des exemples 3 à 8 et les résultats des mesures effectuées sur plaques figurent au tableau III.

TABLEAU III

| Exemple | 4 | 5 | 8 | 9 | 10 | 11 |
|---------|-----|-----|-----|-----|-----|-----|
| Shore A | 80 | 81 | 65 | 86 | 62 | 60 |
| RR | 120 | 110 | 76 | 140 | 30 | 32 |
| AR | 620 | 600 | 950 | 530 | 410 | 590 |
| Mattia | 10 | 7 | 0 | 23 | 0 | 0 |

## TABLEAU IV

| Exemple | d | I.F. | J | C | Mw/Mn | p | b | Mg |
|---------|--------|------|------|----|-------|------|------|----|
| 9 | 0,8846 | 3,4 | 74 | 10 | 2,6 | 0 | 10,3 | 64 |
| 10 | 0,8634 | 0,9 | (*) | 0 | 2,6 | 10,4 | 0 | 92 |
| 11 | 0,8656 | 0,6 | (*) | 0 | 2,2 | 22 | 0 | 94 |

(*) non déterminable étant donné l'absence de cristallinité résiduelle

Exemples 12 à 14

Dans une installation identique à celle des exemples 3 à 8, on effectue la copolymérisation de l'éthylène et du propylène sous une pression de 800 bars, en l'absence d'hydrogène. Le système catalytique utilisé est le même que celui des exemples 3 à 8. Le tableau V rassemble, d'une part, les conditions de fabrication et, d'autre part, les résultats d'analyse des copolymères obtenus.

## TABLEAU V

| Exemple | $T_1$ | $T_2$ | $T_3$ | $N_2$ | $C_3$ |
|---------|-------|-------|-------|-------|-------|
| 12 | 208 | 232 | 255 | 5 | 80 |
| 13 | 188 | 229 | 241 | 4,4 | 74 |
| 14 | 182 | 235 | 255 | 5,2 | 77 |

## TABLEAU V (suite)

| Exemple | d | I.F. | J | Mw/Mn | P | Mg |
|---------|---|------|---|-------|---|-----|
| 12 | 0,8790 | 2,1 | 121 | 7,0 | 15,1 | 44 |
| 13 | 0,8824 | 0,8 | 120 | 6,7 | 13,4 | 60 |
| 14 | 0,8768 | 4,3 | 122 | 6,7 | 16,0 | 39 |

EXEMPLE 15

Dans un réacteur autoclave maintenu à la température de 175°C et sous une pression de 800 bars, on copolymérise un mélange de 21% en volume d'éthylène et de 79% en volume de butène-1, en présence de 50% en volume d'azote par rapport audit mélange. Le système catalytique utilisé comprend, d'une part, un composé de formule $TiCl_3$, 1/3 $AlCl_3$, 2 $VCl_3$ et, d'autre part, le tétraisobutylaluminoxane en tant qu'activateur dans un rapport atomique

$$\frac{Al}{Ti + V}$$

égal à 4. Le copolymère obtenu présente les caractéristiques suivantes :

| | |
|---|---|
| d = 0,8709 | I.F. = 1,1 dg/min. |
| Mw/Mn = 4,7 | Mg = 66 000 |
| J = 116°C | B = 19,1% |

EXEMPLE 16

Le terpolymère de l'exemple 5 est malaxé pendant 5 minutes à 150°C puis moulé en plaques par compression à 160°C, d'abord pendant 2 minutes sous faible pression, puis pendant 3 minutes à 200 bars, et enfin sous presse froide.
Les propriétés mesurées sur plaques sont les suivantes :

Dureté Shore A      : 75
RR (daN/cm²)        : 120
AR (%)              : 810

EXEMPLES 17 à 20

Le terpolymère de l'exemple 8, le cas échéant (exemples 18 à 20) mélangé avec y% en poids d'acide stéarique en poudre commercialisé sous la dénomination BAION AC, est moulé en plaques par compression à 200°C. Sur ces plaques on mesure :

- le caractère collant, par toucher,
- l'énergie de rupture à -20°C, exprimée en joules et déterminée dans le test de choc multiaxial selon la norme NFT 51 118,
- l'allongement à la rupture, exprimé en % et déterminé selon la norme NFT 51 034,
- la dureté Shore A.

Les résultats des mesures effectuées sont rassemblés dans le tableau VI ci-après.

TABLEAU VI

| Exemple | y | Collant | ER | AR | Dureté |
|---------|-----|---------|------|------|--------|
| 17 | 0 | oui | 44 | 950 | 51 |
| 18 | 2 | oui | n.d. | 1070 | 52 |
| 19 | 5 | non | 80 | n.d. | 58 |
| 20 | 10 | non | 70 | 970 | 65 |

**Revendications**

**Revendications pour les Etats contractants suivants : AT, BE, CH, LI, DE, DK, FR, GB, GR, IT, LU, NL, SE**

1. Caoutchouc polyoléfinique consistant en un copolymère éthylène/propylène et/ou butène-1, ayant un indice de fluidité compris entre 0,3 et 15 dg/min. et une densité comprise entre 0,860 et 0,885, comprenant de 74 à 91% en moles de motifs dérivés de l'éthylène et de 9 à 26% en moles de motifs dérivés du propylène et/ou du butène-1, caractérisé par une température de fusion cristalline J, comprise entre 100° et 125°C.

2. Caoutchouc polyoléfinique selon la revendication 1, sous forme de granulés dont la surface est enrobée au moyen d'huile de silicone, d'agent tensio-actif non-ionique, d'acide gras ou de sel d'acide gras.

3. Caoutchouc polyoléfinique selon l'une des revendications 1 et 2, caractérisé en ce qu'il possède un indice de polydispersité compris entre 3,5 et 15.

4. Caoutchouc polyoléfinique selon l'une des revendications 1 à 3, caractérisé en ce qu'il possède une masse moléculaire géométrique moyenne comprise entre 35 et 70 kg/mole.

5. Caoutchouc polyoléfinique selon l'une des revendications 1 à 4, caractérisé en ce qu'il possède un taux de cristallinité résiduelle compris entre 2% et 15%.

6. Caoutchouc polyoléfinique selon l'une des revendications 1 à 5, caractérisé en ce que la relation entre sa densité d et sa teneur molaire x, exprimée en pourcentage, en motifs dérivés du propylène et du butène-1 se traduit par la double équation :
$$0,9084 \leq d + 0,002\, x \leq 0,918$$

7. Caoutchouc réticulé par un système à base de peroxyde ou d'alkoxysilane, caractérisé en ce qu'il comprend un caoutchouc polyoléfinique selon l'une des revendications 1 à 6.

8. Caoutchouc réticulé selon la revendication 7, caractérisé en ce qu'il possède :

 - une dureté Shore A comprise entre 60 et 82,
 - un allongement à la rupture au moins égal à 600%,
 - une résistance à la rupture comprise entre 60 et 150 daN/cm$^2$, et
 - une flexion de Mattia (déterminée selon la norme NFT 51016) ne dépassant pas 12 mm d'entaille après 10$^5$ flexions.

9. Procédé d'obtention du caoutchouc polyoléfinique selon la revendication 1, consistant à copolymériser, à une température de 150° à 300°C et sous une pression de 400 à 2000 bars, un flux gazeux contenant de 15 à 42% en volume d'éthylène et de 58% à 85% en volume de propylène et/ou de butène-1, en présence d'un système catalytique de type Ziegler comprenant d'une part, au moins un composé de métal de transition des groupes IVB, VB, VIB et VIII de la Classification Périodique, et, d'autre part, au moins un composé organo-aluminique, et le cas échéant, en présence d'au moins un agent de transfert de chaîne.

**10.** Procédé selon la revendication 9, caractérisé en ce que la composition du flux gazeux soumis à la copolymérisation est telle que le rapport en volume

$$\frac{\text{propylène}}{\text{butène-1}}$$

dépasse 0,3.

## Revendications pour l'Etat contractant suivant : ES

**1.** Procédé d'obtention d'un caoutchouc polyoléfinique consistant en un copolymère éthylène/propylène et/ou butène-1, ayant un indice de fluidité compris entre 0,3 et 15 dg/min. et une densité comprise entre 0,860 et 0,885, comprenant de 74 à 91% en moles de motifs dérivés de l'éthylène et de 9 à 26% en moles de motifs dérivés du propylène et/ou du butène-1, et ayant une température de fusion cristalline J comprise entre 100° et 125°C, caractérisé par le fait qu'il consiste à copolymériser, à une température de 150° à 300°C et sous une pression de 400 à 2000 bars, un flux gazeux contenant de 15 à 42% en volume d'éthylène et de 58% à 85% en volume de propylène et/ou de butène-1, en présence d'un système catalytique de type Ziegler comprenant d'une part, au moins un composé de métal de transition des groupes IVB, VB, VIB et VIII de la Classification Périodique, et, d'autre part, au moins un composé organo-aluminique, et le cas échéant, en présence d'au moins un agent de transfert de chaîne.

**2.** Procédé selon la revendication 1, caractérisé par le fait que la composition du flux gazeux soumis à la copolymérisation est telle que le rapport en volume propylène/butène-1 dépasse 0,3.

**3.** Procédé selon l'une des revendications 1 et 2, caractérisé par le fait qu'après sa production, on conditionne le caoutchouc polyoléfinique sous forme de granulés dont la surface est enrobée au moyen d'huile de silicone, d'agent tensio-actif non-ionique, d'acide gras ou de sel d'acide gras.

**4.** Procédé selon l'une des revendications 1 à 3, caractérisé par le fait qu'il conduit à un caoutchouc polyoléfinique ayant un indice de polydispersité compris entre 3,5 et 15.

**5.** Procédé selon l'une des revendications 1 à 4, caractérisé par le fait qu'il conduit à un caoutchouc polyoléfinique possédant une masse moléculaire géométrique moyenne comprise entre 35 et 70 kg/mole.

**6.** Procédé selon l'une des revendications 1 à 5, caractérisé par le fait qu'il conduit à un caoutchouc polyoléfinique possédant un taux de cristallinité résiduelle compris entre 2% et 15%.

**7.** Procédé selon l'une des revendications 1 à 6, caractérisé par le fait qu'il conduit à un caoutchouc polyoléfinique tel que la relation entre sa densité d et sa teneur molaire x, exprimée en pourcentage, en motifs dérivés du propylène et du butène-1 se traduit par la double équation :

$$0,9084 \leq d + 0,002\, x \leq 0,918.$$

**8.** Caoutchouc réticulé par un système à base de peroxyde ou d'alkoxysilane, caractérisé par le fait qu'il comprend un caoutchouc polyoléfinique consistant en un copolymère éthylène/propylène et/ou butène-1, ayant un indice de fluidité compris entre 0,3 et 15 dg/min. et une densité comprise entre 0,860 et 0,885, comprenant de 74 à 91% en moles de motifs dérivés de l'éthylène et de 9 à 26% en moles de motifs dérivés du propylène et/ou du butène-1, ledit caoutchouc polyoléfinique ayant une température de fusion cristalline J comprise entre 100° et 125°C.

**9.** Caoutchouc réticulé selon la revendication 8, caractérisé par le fait qu'il possède :

- une durée Shore A comprise entre 60 et 82,
- un allongement à la rupture au moins égal à 600%,
- une résistance à la rupture comprise entre 60 et 150 daN/cm$^2$, et
- une flexion de Mattia (déterminée selon la norme NFT 51016) ne dépassant pas 12 mm d'entaille après 10$^5$

flexions.

10. Caoutchouc réticulé selon l'une des revendications 8 et 9, caractérisé par le fait que le caoutchouc polyoléfinique possède un indice de polydispersité compris entre 3,5 et 15.

11. Caoutchouc réticulé selon l'une des revendications 8 à 10, caractérisé par le fait que le caoutchouc polyoléfinique possède une masse moléculaire géométrique moyenne comprise entre 35 et 70 kg/mole.

12. Caoutchouc réticulé selon l'une des revendications 8 à 11, caractérisé par le fait que le caoutchouc polyoléfinique possède un taux de cristallinité résiduelle compris entre 2% et 15%.

13. Caoutchouc réticulé selon l'une des revendications 8 à 12, caractérisé par le fait que le caoutchouc polyoléfinique a une relation entre sa densité d et sa teneur molaire x, exprimée en pourcentage, en motifs dérivés du propylène et du butène-1 se traduisant par la double équation :

$$0,9084 \leq d + 0,002 \, x \leq 0,918.$$

14. Procédé d'obtention d'un caoutchouc polyoléfinique consistant en un copolymère éthylène/propylène et/ou butène-1, ayant un indice de fluidité compris entre 0,3 et 15 dg/min. et une densité comprise entre 0,860 et 0,885, comprenant de 74 à 91% en moles de motifs dérivés de l'éthylène et de 9 à 26% en moles de motifs dérivés du propylène et/ou du butène-1, et ayant une température de fusion cristalline J comprise entre 100° et 125°C, ledit caoutchouc étant réticulé et possédant :

- une dureté Shore A comprise entre 60 et 82,
- un allongement à la rupture au moins égal à 600%,
- une résistance à la rupture comprise entre 60 et 150 daN/cm$^2$, et
- une flexion de Mattia (déterminée selon la norme NFT 51016) ne dépassant pas 12 mm d'entaille après $10^5$ flexions,

caractérisé par le fait qu'on soumet un caoutchouc polyoléfinique préparé par un procédé tel que défini à l'une des revendications 1 à 7, à l'action d'au moins un peroxyde à raison de 0,5% à 2% en poids par rapport au copolymère, à une température comprise entre 160°C et 250°C et pendant une durée comprise entre 2 et 20 minutes ou bien encore par greffage d'un alkoxysilane suivi de l'hydrolyse du copolymère greffé en présence, le cas échéant, d'un catalyseur d'hydrolyse tel que le dilaurate de dibutylétain.

15. Application d'un caoutchouc polyoléfinique réticulé, tel que défini à l'une des revendications 8 à 13 ou préparé par le procédé tel que défini à la revendication 14, à l'isolation et au remplissage de câbles électriques basse tension et haute tension.

16. Articles industriels, tels que joints d'étanchéité, éléments de chaussures, tuyaux souples, éléments amortissants, profils pour l'industrie du bâtiment et de l'automobile, caractérisés par le fait qu'ils résultent de la transformation, par des techniques d'extrusion, d'injection ou de compression, d'un caoutchouc polyoléfinique réticulé, tel que défini à l'une des revendications 8 à 13 ou préparé par le procédé tel que défini à la revendication 14.

**Patentansprüche**

**Patentansprüche für folgende Vertragsstaaten : AT, BE, CH, LI, DE, DK, FR, GB, GR, IT, LU, NL, SE**

1. Polyolefinkautschuk, bestehend aus einem Ethylen/Propylen- und/oder Buten-1-Copolymeren mit einem Fliessindex zwischen 0,3 und 15 dg/Min. und einer Dichte zwischen 0,860 und 0,885, enthaltend 74 bis 91 Mol% von Ethylen abgeleitete Einheiten und 9 bis 26 Mol% von Propylen und/oder Buten-1 abgeleitete Einheiten, gekennzeichnet durch eine Kristall-Schmelztemperatur J zwischen 100° und 125°C.

2. Polyolefinkautschuk gemäss Patentanspruch 1, in Form von Körnern, deren Oberfäche mit Silikonöl, einem nicht-ionischen oberflächenaktiven Mittel, einer Fettsäure oder einem Salz einer Fettsäure umhüllt ist.

3. Polyolefinkautschuk gemäss einem der Patentansprüche 1 und 2, dadurch gekennzeichnet, dass dieser einen Polydispersitätsindex zwischen 3,5 und 15 besitzt.

4.  Polyolefinkautschuk gemäss einem der Patentansprüche 1 bis 3, dadurch gekennzeichnet, dass dieser eine mittlere geometrische molare Masse zwischen 35 und 70 kg/Mol besitzt.

5.  Polyolefinkautschuk gemäss einem der Patentansprüche 1 bis 4, dadurch gekennzeichnet, dass dieser einen Anteil von Restkristallinität zwischen 2% und 15% besitzt.

6.  Polyolefinkautschuk gemäss einem der Patentansprüche 1 bis 5, dadurch gekennzeichnet, dass das Verhältnis zwischen seiner Dichte d und seinem molaren Gehalt x, ausgedrückt in Prozenten, an von Propylen und Buten-1 abgeleiteten Einheiten durch die doppelte Gleichung

$$0,9084 \leq d + 0,002 \, x \leq 0,918$$

dargestellt wird.

7.  Durch ein System auf Basis von Peroxid oder Alkoxysilan vernetzter Kautschuk, dadurch gekennzeichnet, dass dieser einen Polyolefinkautschuk gemäss einem der Patentansprüche 1 bis 6 umfasst.

8.  Vernetzter Kautschuk gemäss Patentanspruch 7, dadurch gekennzeichnet, dass dieser

    -   eine Shorehärte A zwischen 60 und 82 besitzt,
    -   ein Bruchdehnbarkeit von mindestens 600% besitzt,
    -   eine Bruchfestigkeit zwischen 60 und 150 daN/cm$^2$ besitzt, und
    -   eine Biegsamkeit nach Mattia (festgestellt nach der Norm NFT 51016) besitzt, welche eine Einkerbung von 12 mm nach 10$^5$ Biegungen nicht übersteigt.

9.  Verfahren zur Herstellung des Polyolefinkautschuks gemäss Patentanspruch 1, bestehend aus der Copolymerisation eines Gasstromes, enthaltend 15 bis 42 Volumen-% Ethylen und 58 bis 85 Volumen-% Propylen und/oder Buten-1, bei einer Temperatur von 150° bis 300°C und einem Druck von 400 bis 2000 bar in Anwesenheit eines Katalysatorsystems vom Ziegler-Typus, enthaltend einerseits zumindest eine Verbindung eines Übergangsmetalles der Gruppen IVB, VB, VIB und VIII des Periodensystems und andererseits zumindest eine Organoaluminiumverbindung, gegebenenfalls in Anwesenheit zumindest eines Kettenübertragungsmittels.

10. Verfahren gemäss Patentanspruch 9, dadurch gekennzeichnet, dass die Zusammensetzung des Gasstromes, welcher der Copolymerisation unterworfen wird, so ist, dass das Volumenverhältnis

$$\frac{\text{Propylen}}{\text{Buten-1}}$$

0,3 übersteigt.

**Patentansprüche für folgenden Vertragsstaat : ES**

1.  Verfahren zur Herstellung eines Polyolefinkautschuks, bestehend aus einem Ethylen/Propylen- und/oder Buten-1-Copolymeren mit einer Fliessindex zwischen 0,3 und 15 dg/Min. und einer Dichte zwischen 0,860 und 0,885, enthaltend 74 bis 91 Mol% von Ethylen abgeleitete Einheiten und 9 bis 26 Mol% von Propylen und/oder Buten-1 abgeleitete Einheiten und einer Kristall-Schmelztemperatur J zwischen 100° und 125°C, dadurch gekennzeichnet, dass dieses aus der Copolymerisation eines Gasstromes, der 15 bis 42 Volumen-% Ethylen und 58 bis 85 Volumen-% Propylen und/oder Buten-1 enthält, bei einer Temperatur von 150° bis 300°C und einem Druck von 400 bis 2000 bar in Anwesenheit eines Katalysatorsystems vom Ziegler-Typus, enthaltend einerseits zumindest eine Verbindung eines Übergangsmetalles der Gruppen IVB, VB, VIB und VIII des Periodensystems und andererseits zumindest eine Organoaluminiumverbindung, gegebenenfalls in Anwesenheit zumindest eines Kettenübertragungsmittels, besteht.

2.  Verfahren gemäss Patentanspruch 1, dadurch gekennzeichnet, dass die Zusammensetzung des Gasstromes, welcher der Copolymerisation unterworfen wird, so ist, dass das Volumenverhältnis Propylen/Buten-1 0,3 übersteigt.

3.  Verfahren gemäss einem der Patentansprüche 1 und 2, dadurch gekennzeichnet, dass man den Polyolefinkautschuk nach seiner Herstellung in die Form von Körnern bringt, deren Oberfäche mit Silikonöl, einem nicht-ionischen oberflächenaktiven Mittel, einer Fettsäure oder einem Salz einer Fettsäure umhüllt ist.

**4.** Verfahren gemäss einem der Patentansprüche 1 bis 3, dadurch gekennzeichnet, dass dieses einen Polyolefinkautschuk ergibt, der einen Polydispersitätsindex zwischen 3,5 und 15 besitzt.

**5.** Verfahren gemäss einem der Patentansprüche 1 bis 4, dadurch gekennzeichnet, dass dieses einen Polyolefinkautschuk mit einer mittleren geometrischen molaren Masse zwischen 35 und 70 kg/Mol ergibt.

**6.** Verfahren gemäss einem der Patentansprüche 1 bis 5, dadurch gekennzeichnet, dass dieses einen Polyolefinkautschuk mit einem Anteil von Restkristallinität zwischen 2% und 15% ergibt.

**7.** Verfahren gemäss einem der Patentansprüche 1 bis 6, dadurch gekennzeichnet, dass dieses einen Polyolefinkautschuk mit einem Verhältnis zwischen seiner Dichte d und seinem molaren Gehalt x, ausgedrückt in Prozenten, an von Propylen und Buten-1 abgeleiteten Einheiten ergibt, das durch die doppelte Gleichung

$$0,9084 \leq d + 0,002\ x \leq 0,918$$

dargestellt wird.

**8.** Durch ein System auf Basis von Peroxid oder Alkoxysilan vernetzter Kautschuk, dadurch gekennzeichnet, dass dieser einen Polyolefinkautschuk umfasst, der aus einem Ethylen/Propylen- und/oder Buten-1-Copolymeren mit einem Fliessindex zwischen 0,3 und 15 dg/Min. und einer Dichte zwischen 0,860 und 0,885 besteht und 74 bis 91 Mol% von Ethylen abgeleitete Einheiten und 9 bis 26 Mol% von Propylen und/oder Buten-1 abgeleitete Einheiten enthält, wobei dieser Polyolefinkautschuk eine Kristall-Schmelztemperatur J zwischen 100° und 125°C besitzt.

**9.** Vernetzter Kautschuk gemäss Patentanspruch 8, dadurch gekennzeichnet, dass dieser

- eine Shorehärte A zwischen 60 und 82 besitzt,
- ein Bruchdehnbarkeit von mindestens 600% besitzt,
- eine Bruchfestigkeit zwischen 60 und 150 daN/cm$^2$ besitzt und
- eine Biegsamkeit nach Mattia (festgestellt nach der Norm NFT 51016) besitzt, welche eine Einkerbung von 12 mm nach 10$^5$ Biegungen nicht übersteigt.

**10.** Vernetzter Kautschuk gemäss einem der Patentansprüche 8 und 9, dadurch gekennzeichnet, dass der Polyolefinkautschuk einen Polydispersitätsindex zwischen 3,5 und 15 besitzt.

**11.** Vernetzter Kautschuk gemäss einem der Patentansprüche 8 bis 10, dadurch gekennzeichnet, dass der Polyolefinkautschuk eine mittlere geometrische molare Masse zwischen 35 und 70 kg/Mol besitzt.

**12.** Vernetzter Kautschuk gemäss einem der Patentansprüche 8 bis 11, dadurch gekennzeichnet, dass der Polyolefinkautschuk einen Anteil von Restkristallinität zwischen 2% und 15% besitzt.

**13.** Vernetzter Kautschuk gemäss einem der Patentansprüche 8 bis 12, dadurch gekennzeichnet, dass der Polyolefinkautschuk ein Verhältnis zwischen seiner Dichte d und seinem molaren Gehalt x, ausgedrückt in Prozenten, an von Propylen und Buten-1 abgeleiteten Einheiten besitzt, das durch die doppelte Gleichung

$$0,9084 \leq d + 0,002\ x \leq 0,918$$

dargestellt wird.

**14.** Verfahren zur Herstellung eines Polyolefinkautschuks, der aus einem Ethylen/Propylen- und/oder Buten-1-Copolymeren mit einem Fliesindex zwischen 0,3 und 15 dg/Min. und einer Dichte zwischen 0,860 und 0,885 besteht, 74 bis 91 Mol% von Ethylen abgeleitete Einheiten und 9 bis 26 Mol% von Propylen und/oder Buten-1 abgeleitete Einheiten enthält und eine Kristall-Schmelztemperatur J zwischen 100° und 125°C besitzt, dieser Kautschuk vernetzt ist und insbesondere besitzt:

- eine Shorehärte A zwischen 60 und 82,
- ein Bruchdehnbarkeit von mindestens 600%,
- eine Bruchfestigkeit zwischen 60 und 150 daN/cm$^2$ und
- eine Biegsamkeit nach Mattia (festgestellt nach der Norm NFT 51016), welche eine Einkerbung von 12 mm nach 10$^5$ Biegungen nicht übersteigt,

dadurch gekennzeichnet, dass man einen gemäss einem der Verfahren der Patentansprüche 1 bis 7 hergestellten Polyolefinkautschuk der Einwirkung zumindest eines Peroxids in einem Anteil von ungefähr 0,5 bis 2 Gew.%, bezogen auf das Copolymere, bei einer Temperatur zwischen ungefähr 160°C und 250°C und während einer Dauer zwischen ungefähr 2 und 20 Minuten oder aber auch dem Aufpfropfen eines Alkoxysilans unterwirft, gefolgt von der Hydrolyse des Pfropf-Copolymeren, gegebenenfalls in Anwesenheit eines Hydrolysekatalysators, wie Dibutylzinndilaurat.

15. Verwendung eines vernetzten Polyolefinkautschuks, wie in einem der Patentansprüche 8 bis 13 definiert oder gemäss dem Verfahren des Patentanspruches 14 hergestellt, zur Isolierung und zur Füllung von elektrischen Kabeln für niedrige Spannung und hohe Spannung.

16. Industrielle Artikel, wie Dichtungen, Teile von Schuhen, Schläuche, dämpfende Teile, Profile für die Bau- und Autoindustrie, dadurch gekennzeichnet, dass sie aus der Weiterverarbeitung eines vernetzten Polyolefinkautschuks, wie in einem der Patentansprüche 8 bis 13 definiert oder gemäss dem Verfahren des Patentanspruches 14 hergestellt, durch Extrudier-, Injektions- oder Kompressions-techniken resultieren.

## Claims

### Claims for the following Contracting States : AT, BE, CH, LI, DE, DK, FR, GB, GR, IT, LU, NL, SE

1. Polyolefin rubber consisting of an ethylene/propylene and/or 1-butene copolymer, which has a melt index of between 0.3 and 15 dg/min and a relative density of between 0.860 and 0.885, comprising from 74 to 91 mol% of units derived from ethylene and from 9 to 26 mol% of units derived from propylene and/or 1-butene, characterised by a crystalline melting point J of between 100° and 125°C.

2. Polyolefin rubber according to Claim 1, in the form of granules whose surface is coated with silicone oil, a nonionic surface-active agent, a fatty acid or a fatty acid salt.

3. Polyolefin rubber according to one of Claims 1 and 2, characterised in that it has a polydispersity index of between 3.5 and 15.

4. Polyolefin rubber according to one of Claims 1 to 3, characterised in that it has an average geometric molecular weight of between 35 and 70 kg/mole.

5. Polyolefin rubber according to one of Claims 1 to 4, characterised in that it has a degree of residual crystallinity of between 2% and 15%.

6. Polyolefin rubber according to one of Claims 1 to 5, characterised in that the relationship between its relative density d and its molar content x, expressed as a percentage, of units derived from propylene and from 1-butene is expressed by the double equation:

$$0.9084 \leq d + 0.002\, x \leq 0.918$$

7. Rubber crosslinked with a system based on peroxide or alkoxysilane, characterised in that it comprises a polyolefin rubber according to one of Claims 1 to 6.

8. Crosslinked rubber according to Claim *7,* characterised in that it has:

   - a Shore A hardness of between 60 and 82,
   - an elongation at break of at least 600%,
   - a tensile strength of between 60 and 150 daN/cm$^2$, and
   - a Mattia flexure (determined according to NFT standard 51016) not exceeding 12 mm of notch after $10^5$ flexures.

9. Process for obtaining the polyolefin rubber according to Claim 1, consisting in copolymerising, at a temperature of 150° to 300°C and at a pressure of 400 to 2000 bars, a gas stream containing 15 to 42% by volume of ethylene and from 58% to 85% by volume of propylene and/or 1-butene, in the presence of a catalyst system of the Ziegler type comprising, on the one hand, at least one compound of a transition metal of groups IVB, VB, VIB and VIII of the Periodic Classification and, on the other hand, at least one organoaluminium compound and, if appropriate, in the presence of at least one chain transfer agent.

10. Process according to Claim 9, characterised in that the composition of the gas stream subjected to the copolymerisation is such that the volume ratio of propylene/1-butene exceeds 0.3.

**Claims for the following Contracting State : ES**

1. Process for obtaining a polyolefin rubber consisting of an ethylene/propylene and/or 1-butene copolymer, which has a melt index of between 0.3 and 15 dg/min and a relative density of between 0.860 and 0.885, comprising from 74 to 91 mol% of units derived from ethylene and from 9 to 26 mol% of units derived from propylene and/or 1-butene, and having a crystalline melting point J of between 100° and 125°C, characterised in that it consists in copolymerising, at a temperature of 150° to 300°C and at a pressure of 400 to 2000 bars, a gas stream containing 15 to 42% by volume of ethylene and from 58% to 85% by volume of propylene and/or 1-butene, in the presence of a catalyst system of the Ziegler type comprising, on the one hand, at least one compound of a transition metal of groups IVB, VB, VIB and VIII of the Periodic Classification and, on the other hand, at least one organoaluminium compound and, if appropriate, in the presence of at least one chain transfer agent.

2. Process according to Claim 1, characterised in that the composition of the gas stream subjected to the copolymerisation is such that the volume ratio of propylene/1-butene exceeds 0.3.

3. Process according to one of Claims 1 and 2, characterised in that after its production, the polyolefin rubber is packed in the form of granules whose surface is coated with silicone oil, a nonionic surface-active agent, a fatty acid or a fatty acid salt.

4. Process according to one of Claims 1 to 3, characterised in that it provides a polyolefin rubber having a polydispersity index of between 3.5 and 15.

5. Process according to one of Claims 1 to 4, characterised in that it provides a polyolefin rubber having an average geometric molecular mass of between 35 and 70 kg/mole.

6. Process according to one of Claims 1 to 5, characterised in that it provides a polyolefin rubber having a degree of residual crystallinity of between 2% and 15%.

7. Process according to one of Claims 1 to 6, characterised in that it provides a polyolefin rubber such as the relationship between its relative density d and its molar content x, expressed as a percentage, of units derived from propylene and from 1-butene is expressed by the double equation :
$$0.9084 \leq d + 0.002 \, x \leq 0.918$$

8. Rubber crosslinked with a system based on peroxide or alkoxysilane, characterised in that it comprises a polyolefin rubber consisting of an ethylene/propylene and/or 1-butene copolymer, which has a melt index of between 0.3 and 15 dg/min and a relative density of between 0.860 and 0.885, comprising from 74 to 91 mol% of units derived from ethylene and from 9 to 26 mol% of units derived from propylene and/or 1-butene, said polyolefin rubber having a crystalline melting point J of between 100° and 125°C.

9. Crosslinked rubber according to Claim 8, characterised in that it has :

   - a Shore A hardness of between 60 and 82,
   - an elongation at break of at least 600%,
   - a tensile strength of between 60 and 150 daN/cm$^2$, and
   - a Mattia flexure (determined according to NFT standard 51016) not exceeding 12 mm of notch after 10$^5$ flexures.

10. Crosslinked rubber according to one of Claims 8 and 9, characterised in that the polyolefin rubber has a polydispersity index of between 3.5 and 15.

11. Crosslinked rubber according to one of Claims 8 to 10, characterised in that the polyolefin rubber has an average geometric molecular weight of between 35 and 70 kg/mole.

12. Crosslinked rubber according to one of Claims 8 to 11, characterised in that the polyolefin rubber has a degree of residual crystallinity of between 2% and 15%.

13. Crosslinked rubber according to one of Claims 8 to 12, characterised in that the polyolefin rubber has a relationship between its relative density d and its molar content x, expressed as a percentage, of units derived from propylene and from 1-butene, expressed by the double equation :

$$0.9084 \leq d + 0.002\,x \leq 0.918.$$

14. Process for obtaining a polyolefin rubber consisting of an ethylene/propylene and/or 1-butene copolymer, which has a melt index of between 0.3 and 15 dg/min and a relative density of between 0.860 and 0.885, comprising from 74 to 91 mol% of units derived from ethylene and from 9 to 26 mol% of units derived from propylene and/or 1-butene, and having a crystalline melting point J of between 100° and 125°C, said rubber being crosslinked and having especially :

- a Shore A hardness of between 60 and 82,
- an elongation at break of at least 600%,
- a tensile strength of between 60 and 150 daN/cm$^2$, and
- a Mattia flexure (determined according to NFT standard 51016) not exceeding 12 mm of notch after 10$^5$ flexures

characterised in that a polyolefin rubber prepared by a process as defined in one of Claims 1 to 7 is subjected to the action of at least one peroxide in a proportion approximately from 0.5% to 2% by weight relative to the copolymer, at a temperature of approximately between 160°C and 250°C and for a period of approximately between 2 and 20 minutes or else by grafting an alkoxysilane, followed by the hydrolysis of the graft copolymer in the presence, if appropriate, of a hydrolysis catalyst such as dibutyltin dilaurate.

15. Application of a crosslinked polyolefin rubber, as defined in one of Claims 8 to 13 or prepared by the process as defined in Claim 14 to the insulation and filling of low-voltage to high-voltage electrical cables.

16. Industrial articles such as seals, shoe components, flexible tubing, damping components, profiles for the building and motor vehicle industry, characterised in that they result from the processing by extrusion, injection or compression techniques of a crosslinked polyolefin rubber as defined in one of Claims 8 to 13 or prepared by the process as defined in Claim 14.

FIG.1

EP 0 452 467 B1

FIG. 2